(19)

Europäisches
Patentamt
European
Patent Office
Office européen
des brevets

(11) **EP 2 426 831 A1**

(12) **EUROPEAN PATENT APPLICATION**
published in accordance with Art. 153(4) EPC

(43) Date of publication:
**07.03.2012 Bulletin 2012/10**

(51) Int Cl.:
***H04B 7/06*** (2006.01)

(21) Application number: **10769277.4**

(22) Date of filing: **22.04.2010**

(86) International application number:
**PCT/CN2010/072084**

(87) International publication number:
**WO 2010/124588 (04.11.2010 Gazette 2010/44)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.04.2009 CN 200910083055**

(71) Applicant: **ZTE Corporation**
**Shenzhen, Guangdong 518057 (CN)**

(72) Inventors:
• **ZHANG, Rong**
**Shenzhen**
**Guangdong 518057 (CN)**
• **HAO, Peng**
**Shenzhen**
**Guangdong 518057 (CN)**

• **WANG, Yuxin**
**Shenzhen**
**Guangdong 518057 (CN)**
• **ZHU, Peng**
**Shenzhen**
**Guangdong 518057 (CN)**
• **ZHANG, Yuqiang**
**Shenzhen**
**Guangdong 518057 (CN)**

(74) Representative: **Price, Nigel John King**
**J.A. Kemp & Co.**
**14 South Square**
**Gray's Inn**
**London WC1R 5JJ (GB)**

(54) **MULTI-ANTENNA TRANSMITTING METHOD AND APPARATUS FOR SOUNDING REFERENCE SIGNAL (SRS)**

(57) The present invention discloses a multi-antenna transmitting method and apparatus for a Sounding Reference Signal (SRS). In the scheme of the present invention, in the case of transmitting the uplink SRSs with precoding, a UE can provide orthogonal resources to the different precoding matrixes by a CDM, or TDM, or FDM, or their combination; in the case of transmitting the uplink SRSs without precoding, the UE can transmit the SRSs in the orthogonal resources by the CDM, or TDM, or FDM, or their combination. The scheme of the present invention provides a practical implementation solution for transmitting the uplink SRSs in the multi-antenna case.

FIG. 9

EP 2 426 831 A1

**Description**

Technical Field

The invention relates to communication field, and more particularly, to a multi-antenna transmitting method and apparatus for a sounding reference signal (SRS).

Background of the Related Art

SRS is a signal used to measure channel state information (CSI) between a user equipment (UE) and an e-Node-B (eNB). In a long term evolution (LTE) system, the UE regularly sends an uplink SNR according to a bandwidth, a frequency domain position, a period and a subframe offset, etc., indicated by the eNB. The eNB judges an uplink CSI of the UE according to the received SRS, and performs the operations such as frequency domain selection scheduling and close loop power control according to the obtained CSI.
In the LTE system, a SRS sequence sent by the UE is obtained by cyclical shifting a root sequence $\bar{r}_{u,v}(n)$ by $\alpha$ in a time domain. Different SRS sequences can be obtained by cyclical shifting the same root sequence by different $\alpha$, and the obtained SRS sequences are orthogonal with each other, therefore, these SRS sequences can be allocated to different UEs to implement code division multiple access among the UEs. In the LTE system, the SRS sequence defines eight cyclic shifts which are indicated with a 3-bit signaling and respectively are 0, 1, 2, 3, 4, 5, 6 and 7. In other words, under the same time-frequency resource, the UE within the cell has eight available code resources, and the eNB can configure at most eight UEs to send SRS at the same time in the same time-frequency resource.
In the LTE system, a tree structure is used to configure a frequency domain bandwidth of the SRS. Each SRS bandwidth configuration corresponds to one tree structure, and a SRS bandwidth (SRS-Bandwidth) of the highest level corresponds to the maximum SRS bandwidth of the SRS bandwidth configuration, or is called as a range of SRS bandwidth range. Tables 1 to 4 give the SRS bandwidth configuration in different ranges of the uplink SRS bandwidth, wherein, $N_{\mathrm{RB}}^{\mathrm{UL}}$ is the number of resource blocks (RB) corresponding to the uplink SRS bandwidth.

| SRS bandwidth configuration | SRS-Bandwidth $B_{SRS}$ = 0 | | SRS-Bandwidth $B_{SRS}$ = 1 | | SRS-Bandwidth $B_{SRS}$ = 2 | | SRS-Bandwidth $B_{SRS}$ = 3 | |
|---|---|---|---|---|---|---|---|---|
| $C_{SRS}$ | $m_{SRS,b}$ | $N_b$ | $m_{SRS,b}$ | $N_b$ | $m_{SRS,b}$ | $N_b$ | $m_{SRS,b}$ | $N_b$ |
| 0 | 36 | 1 | 12 | 3 | 4 | 3 | 4 | 1 |
| 1 | 32 | 1 | 16 | 2 | 8 | 2 | 4 | 2 |
| 2 | 24 | 1 | 4 | 6 | 4 | 1 | 4 | 1 |
| 3 | 20 | 1 | 4 | 5 | 4 | 1 | 4 | 1 |
| 4 | 16 | 1 | 4 | 4 | 4 | 1 | 4 | 1 |
| 5 | 12 | 1 | 4 | 3 | 4 | 1 | 4 | 1 |
| 6 | 8 | 1 | 4 | 2 | 4 | 1 | 4 | 1 |
| 7 | 4 | 1 | 4 | 1 | 4 | 1 | 4 | 1 |

Table 1 SRS bandwidth configuration of $6 \leq N_{RB}^{UL} \leq 40$

| SRS bandwidth configuration | SRS-Bandwidth $B_{SRS}$ = 0 | | SRS-Bandwidth $B_{SRS}$ = 1 | | SRS-Bandwidth $B_{SRS}$ = 2 | | SRS-Bandwidth $B_{SRS}$ = 3 | |
|---|---|---|---|---|---|---|---|---|
| $C_{SRS}$ | $m_{SRS,b}$ | $N_b$ | $m_{SRS,b}$ | $N_b$ | $m_{SRS,b}$ | $N_b$ | $m_{SRS,b}$ | $N_b$ |
| 0 | 48 | 1 | 24 | 2 | 12 | 2 | 4 | 3 |
| 1 | 48 | 1 | 16 | 3 | 8 | 2 | 4 | 2 |
| 2 | 40 | 1 | 20 | 2 | 4 | 5 | 4 | 1 |
| 3 | 36 | 1 | 12 | 3 | 4 | 3 | 4 | 1 |

(continued)

| $C_{SRS}$ | $m_{SRS,b}$ | $N_b$ | $m_{SRS,b}$ | $N_b$ | $m_{SRS,b}$ | $N_b$ | $m_{SRS,b}$ | $N_b$ |
|---|---|---|---|---|---|---|---|---|
| 4 | 32 | 1 | 16 | 2 | 8 | 2 | 4 | 2 |
| 5 | 24 | 1 | 4 | 6 | 4 | 1 | 4 | 1 |
| 6 | 20 | 1 | 4 | 5 | 4 | 1 | 4 | 1 |
| 7 | 16 | 1 | 4 | 4 | 4 | 1 | 4 | 1 |

Table 2 SRS bandwidth configuration of $40 < N_{RB}^{UL} \le 60$

| SRS bandwidth configuration | SRS-Bandwidth $B_{SRS} = 0$ | | SRS-Bandwidth $B_{SRS} = 1$ | | SRS-Bandwidth $B_{SRS} = 2$ | | SRS-Bandwidth $B_{SRS} = 3$ | |
|---|---|---|---|---|---|---|---|---|
| $C_{SRS}$ | $m_{SRS,b}$ | $N_b$ | $m_{SRS,b}$ | $N_b$ | $m_{SRS,b}$ | $N_b$ | $m_{SRS,b}$ | $N_b$ |
| 0 | 72 | 1 | 24 | 3 | 12 | 2 | 4 | 3 |
| 1 | 64 | 1 | 32 | 2 | 16 | 2 | 4 | 4 |
| 2 | 60 | 1 | 20 | 3 | 4 | 5 | 4 | 1 |
| 3 | 48 | 1 | 24 | 2 | 12 | 2 | 4 | 3 |
| 4 | 48 | 1 | 16 | 3 | 8 | 2 | 4 | 2 |
| 5 | 40 | 1 | 20 | 2 | 4 | 5 | 4 | 1 |
| 6 | 36 | 1 | 12 | 3 | 4 | 3 | 4 | 1 |
| 7 | 32 | 1 | 16 | 2 | 8 | 2 | 4 | 2 |

Table 3 SRS bandwidth configuration of $60 < N_{RB}^{UL} \le 80$

| SRS bandwidth configuration | SRS-Bandwidth $B_{SRS} = 0$ | | SRS-Bandwidth $B_{SRS} = 1$ | | SRS-Bandwidth $B_{SRS} = 2$ | | SRS-Bandwidth $B_{SRS} = 3$ | |
|---|---|---|---|---|---|---|---|---|
| $C_{SRS}$ | $m_{SRS,b}$ | $N_b$ | $m_{SRS,b}$ | $N_b$ | $m_{SRS,b}$ | $N_b$ | $m_{SRS,b}$ | $N_b$ |
| 0 | 96 | 1 | 48 | 2 | 24 | 2 | 4 | 6 |
| 1 | 96 | 1 | 32 | 3 | 16 | 2 | 4 | 4 |
| 2 | 80 | 1 | 40 | 2 | 20 | 2 | 4 | 5 |
| 3 | 72 | 1 | 24 | 3 | 12 | 2 | 4 | 3 |
| 4 | 64 | 1 | 32 | 2 | 16 | 2 | 4 | 4 |
| 5 | 60 | 1 | 20 | 3 | 4 | 2 | 4 | 1 |
| 6 | 48 | 1 | 24 | 2 | 12 | 2 | 4 | 3 |
| 7 | 48 | 1 | 16 | 3 | 8 | 2 | 4 | 2 |

Table 4 SRS bandwidth configuration of $80 < N_{RB}^{UL} \le 110$

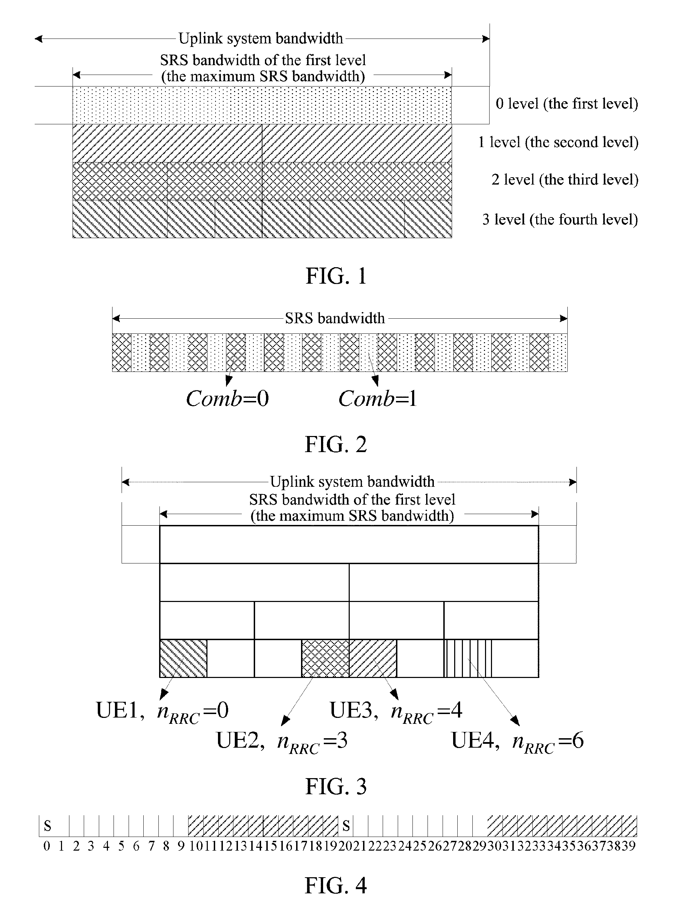

The tree structure of the SRS bandwidth will be illustrated by taking the SRS bandwidth configuration index 1 (i.e., $C_{SRS}$ =1) in Table 1 for example. $B_{SRS}$ = 0 is the 0 level and is the highest level in the tree structure, and the SRS bandwidth of this level is the bandwidth corresponding to 32 RBs and is the maximum SRS bandwidth of the SRS bandwidth configuration being one; $B_{SRS}$ =1 is the 1 level, the SRS bandwidth of this level is the bandwidth corresponding to 16 RBs, and one SRS bandwidth of the above 0 level is divided into two SRS bandwidths of the 1 level; $B_{SRS}$ = 2 is the 2 level, the SRS bandwidth of this level is the bandwidth corresponding to 8 RBs, and one SRS bandwidth of the

EP 2 426 831 A1

above 1 level is divided into two SRS bandwidths of the 2 level; and $B_{SRS}$ = 3 is the 3 level, the SRS bandwidth of this level is the bandwidth corresponding to 4 RBs, and one SRS bandwidth of the above 2 level is divided into two SRS bandwidths of the 3 level. The tree structure is shown as FIG. 1.

In addition, in the same SRS bandwidth, sub-carriers of the SRS are placed with a certain interval, that is, the transmission of the SRS applies the comb structure, and the number of frequency combs in the LTE system is 2. As shown in FIG. 2, when each UE sends the SRS, the UE only uses one of the two frequency combs, Comb = 0 or Comb =1. Therefore, the UE only uses the sub-carriers whose frequency domain index is even or odd number to transmit the SRS. The comb structure allows more UEs to transmit the SRS in the same SRS bandwidth.

In the LTE system, the eNB first allocates one bandwidth configuration index $C_{SRS}$ to each UE in the cell, the UE is able to determine to use which table from Tables 1 to 4 according to the $C_{SRS}$ and the number of RBs $N_{RB}^{UL}$ corresponding to the current uplink bandwidth, and then it can be determine the SRS bandwidth configuration used by the current cell according to the $C_{SRS}$. For some UEs, the eNB can also allocate one SRS bandwidth index $B_{SRS}$ to the UE (or called the index of the level in which the UE is located). The UE can obtain the SRS bandwidth used by the UE according to the SRS bandwidth configuration in the cell and the SRS bandwidth index $B_{SRS}$. For example, the SRS bandwidth configuration index of the current cell is $C_{SRS}$ = 1, $N_{RB}^{UL} = 50$, and then the UE determines that the SRS bandwidth configuration of the current cell is the second row in Table 2. If the SRS bandwidth index allocated by the eNB of the current cell to the UE is 1, the SRS bandwidth of this UE occupies 16 RBs, and the SRS bandwidth of the UE is located in the range of the SRS bandwidth, that is, in the range of the maximum bandwidth of 48 RBs.

After the UE obtains its own SRS bandwidth, the UE determines a frequency domain initial position, at which the UE itself transmits the SRS, according to an upper layer signaling frequency domain position $n_{RRC}$ sent by the eNB. As shown in FIG. 3, the UEs allocated with different $n_{RRC}$ transmit the SRSs in different regions of the cell SRS bandwidth.

In the LTE system, from the time domain the UE only transmits the SRS in the last single carrier frequency division multiple access (SC-FDMA) symbol of the subframe. The configuration of the UE transmitting the SRS in the time domain is related to four parameters: cell-specific period $T_{SFC}$ and subframe offset $\Delta_{SFC}$, as well as UE-specific period $T_{SRS}$ and subframe offset $T_{offset}$. Table 5 gives the cell-specific period and the subframe offset in a frequency division duplexing (FDD) system, and Table 6 gives the cell-specific period and the subframe offset in a time division duplexing (TDD) system. The cell-specific periodicity and the subframe offset gives potential time domain subframe positions for transmitting the SRS by all UEs in the cell, while in other subframes, the use of the last SC-FDMA symbol has no relationship with the SRS transmission.

Table 5 The subframe configuration of transmitting the SRS in the FDD system (FDD sounding reference signal subframe configuration)

| srsSubframeConfiguration | Binary | Configuration Period $T_{SFC}$ (subframes) | Transmission offset $\Delta_{SFC}$ (subframes) |
|---|---|---|---|
| 0 | 0000 | 1 | {0} |
| 1 | 0001 | 2 | {0} |
| 2 | 0010 | 2 | {1} |
| 3 | 0011 | 5 | {0} |
| 4 | 0100 | 5 | {1} |
| 5 | 0101 | 5 | {2} |
| 6 | 0110 | 5 | {3} |
| 7 | 0111 | 5 | {0,1} |
| 8 | 1000 | 5 | {2,3} |
| 9 | 1001 | 10 | {0} |
| 10 | 1010 | 10 | {1} |
| 11 | 1011 | 10 | {2} |
| 12 | 1100 | 10 | {3} |
| 13 | 1101 | 10 | {0,1,2,3,4,6,8} |

4

(continued)

| srsSubframeConfiguration | Binary | Configuration Period $T_{SFC}$ (subframes) | Transmission offset $\Delta_{SFC}$ (subframes) |
|---|---|---|---|
| 14 | 1110 | 10 | {0,1,2,3,4,5,6,8} |
| 15 | 1111 | reserved | reserved |

Table 6 The subframe configuration of transmitting the SRS in the TDD system (TDD sounding reference signal subframe configuration)

| srsSubframeConfiguration | Binary | Configuration Period $T_{SFC}$ (subframes) | Transmission offset $\Delta_{SFC}$ (subframes) |
|---|---|---|---|
| 0 | 0000 | 5 | {1} |
| 1 | 0001 | 5 | {1,2} |
| 2 | 0010 | 5 | {1,3} |
| 3 | 0011 | 5 | {1,4} |
| 4 | 0100 | 5 | {1,2,3} |
| 5 | 0101 | 5 | {1,2,4} |
| 6 | 0110 | 5 | {1,3,4} |
| 7 | 0111 | 5 | {1,2,3,4} |
| 8 | 1000 | 10 | {1,2,6} |
| 9 | 1001 | 10 | {1,3,6} |
| 10 | 1010 | 10 | {1,6,7} |
| 11 | 1011 | 10 | {1,2,6,8} |
| 12 | 1100 | 10 | {1,3,6,9} |
| 13 | 1101 | 10 | {1,4,6,7} |
| 14 | 1110 | reserved | reserved |
| 15 | 1111 | reserved | reserved |

For example, for srsSubframeConfiguration=7 on the eighth row in Table 5, the corresponding $T_{SFC}$ = 5 and $\Delta_{SFC}$ = {0,1} means that in the cell the cell-specific period is 5 subframes and the positions of the subframe 0 and the subframe 1 in each period can be used by the UE to transmit the SRS.

Table 7 gives the UE-specific period and subframe offset in the FDD system, and Table 8 gives the UE-specific period and subframe offset in the TDD system. The UE-specific period and subframe offset provide the time domain period and subframe position for transmitting the SRS by one UE.

Table 7 UE Specific SRS Periodicity $T_{SRS}$ and Subframe Offset Configuration $T_{offset}$ ,FDD

| SRS Configuration Index $I_{SRS}$ | SRS Periodicity $T_{SRS}$ (ms) | SRS Subframe Offset $T_{offset}$ |
|---|---|---|
| 0-1 | 2 | $I_{SRS}$ |
| 2-6 | 5 | $I_{SRS}$ -2 |
| 7-16 | 10 | $I_{SRS}$ -7 |
| 17-36 | 20 | $I_{SRS}$ -17 |
| 37-76 | 40 | $I_{SRS}$ -37 |
| 77-156 | 80 | $I_{SRS}$ -77 |
| 157-316 | 160 | $I_{SRS}$ -157 |

(continued)

| SRS Configuration Index $I_{SRS}$ | SRS Periodicity $T_{SRS}$ (ms) | SRS Subframe Offset $T_{offset}$ |
|---|---|---|
| 317-636 | 320 | $I_{SRS}$ -317 |
| 637-1023 | reserved | reserved |

Table 8 UE Specific SRS Periodicity $T_{SRS}$ and Subframe Offset Configuration $T_{offset}$, TDD

| SRS Configuration Index $I_{SRS}$ | SRS Periodicity $T_{SRS}$ (ms) | SRS Subframe Offset $T_{offset}$ |
|---|---|---|
| 0 | 2 | 0,1 |
| 1 | 2 | 0,2 |
| 2 | 2 | 1,2 |
| 3 | 2 | 0,3 |
| 4 | 2 | 1,3 |
| 5 | 2 | 0,4 |
| 6 | 2 | 1,4 |
| 7 | 2 | 2,3 |
| 8 | 2 | 2,4 |
| 9 | 2 | 3,4 |
| 10-14 | 5 | $I_{SRS}$ - 10 |
| 15-24 | 10 | $I_{SRS}$ - 15 |
| 25-44 | 20 | $I_{SRS}$ -25 |
| 45-84 | 40 | $I_{SRS}$ -45 |
| 85-164 | 80 | $I_{SRS}$ -85 |
| 165-324 | 160 | $I_{SRS}$ -165 |
| 325-644 | 320 | $I_{SRS}$ -325 |
| 645-1023 | reserved | reserved |

For example, for $I_{SRS}$ = 17 in Table 7, as shown in FIG. 4, the UE transmits one SRS every 20ms, and the time domain position is send at the first subframe within 20ms.

The LTE system does not support uplink single user multiple input multiple output (SU-MIMO). Therefore, the UE only has one antenna at each moment to transmit the SRS. To prevent time decay, the UE in the LTE system is configured with two transmitting antennae to support the antenna selection. When the antenna selection of the UE is set as enabled, the UE can select the antenna for transmitting the SRS according to $n_{SRS}$ at different time. The parameter $n_{SRS}$ is used to count the number of the transmitted SRSs, and since the period for transmitting the SRS by the UE is fixed, the $n_{SRS}$ also indicates the time. When the frequency hopping of the SRS in the frequency domain is not enabled, the equation for calculating the antenna index $a(n_{SRS})$ is: $a(n_{SRS}) = n_{SRS} \bmod 2$ ; and when the frequency hopping of the SRS in the frequency domain is enabled, the equation for calculating the antenna index $a(n_{SRS})$ is:

$$a(n_{SRS}) = \begin{cases} \left(n_{SRS} + \lfloor n_{SRS}/2 \rfloor + \beta \cdot \lfloor n_{SRS}/K \rfloor\right) \bmod 2 & \text{when } K \text{ is even} \\ n_{SRS} \bmod 2 & \text{when } K \text{ is odd} \end{cases}, \text{ where:}$$

$$\beta = \begin{cases} 1 & \text{where } K \bmod 4 = 0 \\ 0 & \text{otherwise} \end{cases}.$$

The LTE-Advanced (LTE-A) system is the next generation evolved system of the LTE system the LTE-A system supports the SU-MIMO in the uplink, and at most four antennae can be used as the uplink transmitting antennae, that is to say, the UE can transmit the SRS in multiple antennae at the same time, while the eNB needs to estimate the condition of each channel according to the SRS received in each antenna.

Transmitting the SRS in the multiple antennae can be divided into two different modes according to whether using the precoding: transmitting the precoded SRS or transmitting the non-precoded SRS.

When transmitting the precoded SRS, the UE can configure multiple antennae to use the same orthogonal resource, such as using only one cyclic shift code resource, by the precoding matrix (PM). When transmitting the precoded SRS, the UE transmits the SRS coded by a certain precoding matrix in the configured time frequency resource, and transmits the SRS coded by another precoding matrix in the orthogonal resources. For example, the UE can transmit the SRS coded by a precoding matrix PM1 in the subframe 0 and transmit the SRS coded by a precoding matrix PM2 in the subframe 1. The eNB can determine to use which precoding matrix by comparison and notify the UE by signaling. However, in the relative implementation of transmitting the precoded SRS, there is no specific solution for the mode of frequency division multiplexing (FDM), and also no specific implementation mode of code division multiplexing (CDM) and time division multiplexing (TDM).

When transmitting the non-precoded SRS, a full channel matrix can be obtained, so as to obtain more accurate channel estimation. When transmitting the non-precoded SRS, it needs to configure one group of orthogonal resources for different antennae. However, there is no specific implementation mode about how to get the orthogonal resources in the prior art.

In summary, it is desirable to obtain an implementation method for transmitting SRS in the multiple antennae.

Content of the Invention

In view of this, the main purpose of the present invention is to provide a multi-antenna transmitting method and apparatus for a sounding reference signal (SRS) to specify the implementation of transmitting the uplink SRS in multi-antennae.

To solve the above technical problem, the technical scheme of the present invention is implemented as follows.

A multi-antenna transmitting method for a sounding reference signal (SRS), wherein, an uplink SRS is transmitted without using precoding, and the method comprises: allocating orthogonal resources to different antennae by a code division multiplexing (CDM), a time division multiplexing (TDM), a frequency division multiplexing (FDM), or any combination thereof, and each antenna transmitting the uplink SRS in the orthogonal resource.

Allocating orthogonal resources to different antennae by the CDM comprises: allocating orthogonal code domain resources for transmitting the uplink SRS to the different antennae by the CDM;

allocating orthogonal resources to different antennae by the TDM comprises: allocating orthogonal time domain resources for transmitting the uplink SRS to the different antennae by the TDM;

allocating orthogonal resources to different antennae by the FDM comprises: allocating orthogonal frequency domain resources for transmitting the uplink SRS to the different antennae by the FDM;

allocating orthogonal resources to different antennae by the combination of the CDM and the TDM comprises: allocating orthogonal code domain resources for transmitting the uplink SRS to the different antennae by the CDM, and/or allocating orthogonal time domain resources for transmitting the uplink SRS to the different antennae by the TDM;

allocating orthogonal resources to different antennae by the combination of the CDM and the FDM comprises: allocating orthogonal code domain resources for transmitting the uplink SRS to the different antennae by the CDM, and/or allocating orthogonal frequency domain resources for transmitting the uplink SRS to the different antennae by the FDM;

allocating orthogonal resources to different antennae by the combination of the TDM and the FDM comprises: allocating orthogonal time domain resources for transmitting the uplink SRS to the different antennae by the TDM, and/or allocating orthogonal frequency domain resources for transmitting the uplink SRS to the different antennae by the FDM;

allocating orthogonal resources to different antennae by the combination of the CDM, the TDM and the FDM comprises: allocating orthogonal code domain resources for transmitting the uplink SRS to the different antennae by the CDM, and/or allocating orthogonal time domain resources for transmitting the uplink SRS to the different antennae by the TDM, and/or allocating orthogonal frequency domain resources for transmitting the uplink SRS to the different antennae by the FDM.

In a long term evolution - advanced (LTE-A) system,

said code domain resource is: a root sequence and/or a cyclic shift of the root sequence;

said time domain resource is: a subframe position or a subframe offset;

said frequency domain resource is: a frequency bandwidth and/or a frequency comb.

Before allocating orthogonal resources to different antennae, the method further comprises:

a base station, e-Node-B (eNB), notifying to a user equipment (UE) by a signaling the resource of transmitting the uplink SRS in each antenna; or,

an eNB notifying to a UE by a signaling the resources of transmitting the uplink SRSs in part of antennae, and the UE determining the resource of transmitting the SRS in each antenna according to a configured implicit mapping relationship.

If the way for allocating orthogonal resources to different antennae comprises at least the CDM, said resource is the cyclic shift of the root sequence, and said implicit mapping relationship is: $n_{CS,i} = (\alpha \cdot n_{CS,j} + \beta_i) \bmod N$, wherein, i is an antenna port index, $\alpha = \pm 1$, $n_{CS,j}$ is the cyclic shift used by the known antenna port $j$ to send the uplink SRS, $\beta_i = 0,1,2,..., N\text{-}1$, N is the total number of the cyclic shifts, $i=0,1,...,N\text{-}1$, and $j=0,1,...,N\text{-}1$;
if the way for allocating orthogonal resources to different antennae comprises at least the TDM, said resource is the subframe offset or the subframe position, and said implicit mapping relationship is: transmitting the uplink SRS in the subframe position closest to $T_{offset,j}$ in the subframe offset that allows to send the uplink SRS, wherein $T_{offset,j}$ is the subframe offset of the known antenna port $j$ transmitting the uplink SRS;
if the way for allocating orthogonal resources to different antennae comprises at least the FDM, said resource is the frequency comb, and said implicit mapping relationship is: transmitting the uplink SRS in the frequency comb different from $Comb_j$, wherein $Comb_j$ is the freqeucny comb used by the antenna $j$.
Said $\alpha=1$; said $\beta_i = N/Tx \cdot i$, where $Tx$ is the number of transmitting antennae.
A multi-antenna transmitting method for a sounding reference signal (SRS), wherein, an uplink SRS is transmitted with using precoding, and the method comprises: allocate orthogonal resources to uplink SRSs using different precoding matrixes by a CDM, a TDM, a FDM, or any combination thereof, and each antenna transmitting the uplink SRS encoded by the different precoding matrix in the orthogonal resource.
Allocating orthogonal resources to the uplink SRSs applying the different precoding matrixes by the CDM comprises: allocating orthogonal code domain resources to the different precoding matrixes by the CDM;
allocating orthogonal resources to the uplink SRSs applying the different precoding matrixes by the TDM comprises: allocating orthogonal time domain resources to the different precoding matrixes by the TDM;
allocating orthogonal resources to the uplink SRSs applying the different precoding matrixes by the FDM comprises: allocating orthogonal frequency domain resources to the different precoding matrixes by the FDM;
allocating orthogonal resources to the uplink SRSs applying the different precoding matrixes by the combination of the CDM and the TDM comprises: allocating orthogonal code domain resources to the different precoding matrixes by the CDM, and/or allocating orthogonal time domain resources to the different precoding matrixes by the TDM;
allocating orthogonal resources to the uplink SRSs applying the different precoding matrixes by the combination of the CDM and the FDM comprises: allocating orthogonal code domain resources to the different precoding matrixes by the CDM, and/or allocating orthogonal frequency domain resources to the different precoding matrixes by the FDM;
allocating orthogonal resources to the uplink SRSs applying the different precoding matrixes by the combination of the TDM and the FDM comprises: allocating orthogonal time domain resources to the different precoding matrixes by the TDM, and/or allocating orthogonal frequency domain resources to the different precoding matrixes by the FDM;
allocating orthogonal resources to the uplink SRSs applying the different precoding matrixes by the combination of the CDM, the TDM and the FDM comprises: allocating orthogonal code domain resources to the different precoding matrixes by the CDM, and/or allocating orthogonal time domain resources to the different precoding matrixes by the TDM, and/or allocating orthogonal frequency domain resources to the different precoding matrixes by the FDM.
In a LTE-A system,
said frequency domain resource is: a frequency bandwidth and/or a frequency comb;
said code domain resource is: a root sequence and/or a cyclic shift of the root sequence;
said time domain resource is: a subframe position or a subframe offset.
Before allocating orthogonal resources to different antennae, the method further comprises:

an eNB notifying to a UE by a signaling the resource corresponding to each precoding matrix; or,

an eNB notifying a UE by a signaling the resources corresponding to part of the precoding matrixes, and the UE determining the resource corresponding to each precoding matrix according to a configured implicit mapping relationship.

If the way for allocating orthogonal resources to different precoding matrixes comprises at least the CDM, said resource is the cyclic shift of the root sequence, and said implicit mapping relationship is: $n_{CS,i} = (\alpha \cdot n_{CS,j} + \beta_i) \bmod N$, wherein, $i$ is a precoding matrix index, $\alpha = \pm 1$, $n_{CS,j}$ is the cyclic shift used for transmitting the uplink SRS encoded with the known precoding matrix $j$, $\beta_i = 0,1,2,...,N\text{-}1$, $N$ is the total number of the cyclic shifts, $i=0,1,...,N\text{-}1$, and $j = 0,1,...,N\text{-}1$;
if the way for allocating orthogonal resources to different precoding matrixes comprises at least the TDM, said resource is the subframe offset or the subframe position, and said implicit mapping relationship is: transmitting the uplink SRS in the subframe position closest to $T_{offset,j}$ in the subframe offset that allows to send the uplink SRS, wherein $T_{offset,j}$ is the subframe offset of transmitting the uplink SRS encoding with the known precoding matrix $j$;

if the way for allocating orthogonal resources to different precoding matrixes comprises at least the FDM, said resource is the frequency comb, and said implicit mapping relationship is: transmitting the uplink SRS in the frequency combs different from $Comb_j$, wherein $Comb_j$ is the freqeucny comb of transmitting the uplink SRS encoded with the precoding matrix $j$.

Said $\alpha=1$; said $\beta_i=N/Tx\cdot i$, where $Tx$ is the number of transmitting antennae.

A multi-antenna transmitting apparatus for a SRS, wherein an uplink SRS is transmitted without using precoding, and the apparatus comprises: an allocation unit and a multi-antenna transmission unit, wherein,

said allocation unit is used to allocate orthogonal resources for transmitting the uplink SRSs to different antennae; and said multi-antenna transmission unit comprises multi-antenna, and each antenna is used to transmit the uplink SRS in the orthogonal resource.

The apparatus further comprises:

a reception unit, used to receive the resources of transmitting the uplink SRS in each antenna sent by an eNB via a signaling; or,

a reception unit and mapping unit, wherein: the reception unit is used to receive the resources of transmitting the uplink SRSs in part of antennae sent by an eNB via a signaling; and the mapping unit is used to determine the resource of transmitting the uplink SRS in each antenna according to a configured implicit mapping relationship and the resources of transmitting the uplink SRSs in part of antennae.

A multi-antenna transmitting apparatus for a SRS, wherein, an uplink SRS is transmitted with using precoding and the apparatus comprises: a precoding unit, an allocation unit and a multi-antenna transmission unit, wherein,

said precoding unit is used to encode transmitted uplink SRSs with different precoding matrixes;

said allocation unit is used to allocate orthogonal resources to the uplink SRSs encoded with the different precoding matrixes; and

said multi-antenna transmission unit comprises multi-antenna, and each antenna is used to transmit the uplink SRSs encoded with the different precoding matrixes in the orthogonal resources.

The apparatus further comprises:

a reception unit, used to receive the resources corresponding to each precoding matrix sent by an eNB via a signaling; or,

a reception unit and mapping unit, wherein: the reception unit is used to receive the resources corresponding to part of the precoding matrixes sent by an eNB via a signaling; and the mapping unit is used to determine the resources of transmitting the uplink SRSs encoded with the different precoding matrixes according to a configured implicit mapping relationship and the resources corresponding to part of the precoding matrixes.

In the scheme of the present invention, when transmitting the uplink SRSs with precoding, the UE can provide orthogonal resources to the different precoding matrixes by the CDM, TDM, FDM or their combination; when transmitting the uplink SRSs without precoding, the UE can transmit the SRSs in orthogonal resources by the CDM, TDM, FDM or their combination. The technical scheme in the present invention provides a practical implementation for transmitting the uplink SRSs under the multi-antenna. With the scheme provided in the present invention, the LTE system can obtain an optimal combination among the code domain resources, the time domain resources and the frequency domain resources according to practical conditions, in both the condition of transmitting the SRS with precoding and the condition of transmitting the SRS without precoding, thus to improve the efficiency and performance of the LTE-A system.

Brief Description of Drawings

FIG. 1 is a schematic diagram of a tree structure of a SRS bandwidth;

FIG. 2 is a schematic diagram of a comb structure of SRS;

FIG. 3 is a schematic diagram of a frequency domain initial position at which UE allocated with different $n_{RRC}$ sends a SRS;

FIG. 4 is a schematic diagram of a UE periodically transmitting a SRS in a specific subframe offset;

FIG. 5 is a schematic diagram of transmitting a precoded uplink SRS under a FDM mode in accordance with the present invention;

FIG. 6 is a schematic diagram of the first embodiment of transmitting a non-precoded uplink SRS under a CDM mode in accordance with the present invention;

FIG. 7 is a schematic diagram of the second embodiment of transmitting a non-precoded uplink SRS under a CDM mode in accordance with the present invention;

FIG. 8 is a schematic diagram of the first embodiment of transmitting a non-precoded uplink SRS under a TDM mode in accordance with the present invention;

FIG. 9 is a schematic diagram of the second embodiment of transmitting a non-precoded uplink SRS under a TDM mode in accordance with the present invention;

FIG. 10 is a schematic diagram of an embodiment of transmitting a non-precoded uplink SRS under a FDM mode in accordance with the present invention;

FIG. 11 is a schematic diagram of an embodiment of transmitting a non-precoded uplink SRS under a CDM&FDM mode in accordance with the present invention;

FIG. 12 is a structural diagram of an apparatus for transmitting precoded uplink SRS in multiple antennae in accordance with the present invention; and

FIG. 13 is a structural diagram of an apparatus structure for transmitting non-precoded uplink SRS in multiple antennae in accordance with the present invention.

Preferred Embodiments of the Present Invention

The present invention aims to provide a scheme for transmitting uplink SRSs under multiple antennae. Therefore, it needs to consider how to allocate the specific resources to multiple antennae and whether it needs to use precoding. In the present invention, when transmitting the precoded uplink SRSs, allocate orthogonal resources to the uplink SRSs encoded with different precoding matrixes by the CDM, the TDM, the FDM or any combination of the CDM, the TDM and the FDM, and each antenna transmits the uplink SRS encoded with the different precoding matrix in the orthogonal resource, so that the uplink SRSs encoded with the different precoding matrixes can be transmitted in the orthogonal resources; when transmitting the non-precoded SRSs, allocate orthogonal resources to different antennae by the CDM, the TDM, the FDM, or any combination of the CDM, the TDM and the FDM, and each antenna transmits the uplink SRS in the orthogonal resource.
In the following, the present invention respectively describes implementations of transmitting the uplink SRS with precoding by the FDM, transmitting the uplink SRS without precoding by the CDM, transmitting the uplink SRS without precoding by the TDM and transmitting the uplink SRS without precoding by the FDM.

Transmitting the uplink SRS with precoding by the FDM

Since the SRS bandwidth applies a comb-like structure, the frequencies between different frequency combs are orthogonal with each other. Therefore, the present invention proposes that under the FDM, the UE allocates sub-carriers in different frequency combs to the SRSs with different precoding matrixes respectively. The UE can obtain the frequency combs for transmitting the uplink SRS coded with each precoding matrix by the following two ways: one is a way of signaling notification, that is, the eNB notifies the frequency comb for transmitting the uplink SRS coded with each precoding matrix to the UE by the signaling; the other is a way of implicit mapping, that is, the eNB notifies the frequency combs applied by part of the precoding matrixes, such as one frequency comb applied for coding by one precoding matrix, to the UE by the signaling, while the frequency combs used by other precoding matrixes are obtained by the known frequency comb for transmitting the uplink SRS according to a configured implicit mapping relationship. The implicit mapping relationship can be preconfigured in the UE or notified to the UE in advance by the signaling. There are a number of specific implementations for the implicit mapping relationship. In practical applications, if there is only one implicit mapping relationship, this implicit mapping relationship can be preconfigured in the UE; and if there is a plurality of implicit mapping relationships, the UE can be notified to use which one of the implicit mapping relationships by the signaling.

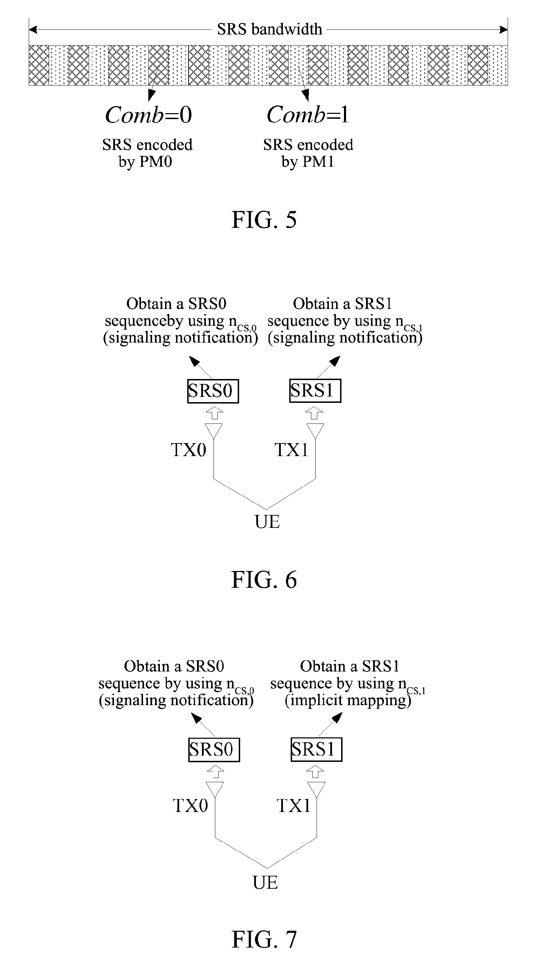

For example, the number of the precoding matrixes is 2, being PM0 and PM1 respectively; moreover, the UE has two transmitting antennae, TX0 and TX1 respectively. As shown in FIG. 5, with the signaling notification or the implicit mapping, the UE determines the frequency comb for transmitting the uplink SRS in each antenna, and allocates the TX0 and the TX1 to transmit the uplink SRS encoded with PM0 in the carrier of Comb=0 and the TX0 and the TX1 to transmit the uplink SRS encoded with PM1 in the carrier of Comb=1, so that the uplink SRS encoded with PM0 and the uplink SRS encoded with PM1 are transmitted in orthogonal subcarriers.

Additionally, under the FDM, besides of the frequency comb implementation method, it can be realized that the uplink SRSs encoded with different precoding matrixes transmit in the orthogonal frequency domain resources by allocating orthogonal frequency bands to the different precoding matrixes or by combining the allocated orthogonal frequency bands with the different frequency combs.

Transmitting the uplink SRS without precoding by the CDM

For the CDM, the UE allocates orthogonal code domain resources of transmitting the uplink SRSs to different antennae, and the different antennae transmit the uplink SRSs in the orthogonal code domain resources. Specifically, in the LTE-A system, the UE can achieve allocation of the orthogonal code resources by allocating different cyclic shifts used for transmitting the uplink SRS to the different antennae, so that the different antennae can transmit the uplink SRS in the orthogonal code domain resources. The UE can obtain the cyclic shift used for transmitting the uplink SRS in each antenna by the following two ways: one is a way of signaling notification, that is, the eNB notifies the cyclic shift used for transmitting the uplink SRS in each antenna to the UE by the signaling; the other one is a way of implicit mapping, that is, the eNB notifies to the UE by the signaling the cyclic shift used for transmitting the uplink SRS in part of the antennae such as one antenna, while the cyclic shifts used for transmitting the uplink SRSs in other antennae are obtained from the known cyclic shift according to the configured implicit mapping relationship.

Said implicit mapping relationship can be preconfigured in the UE or be notified to the UE by the signaling in advance. There is a variety of specific implementations for the implicit mapping relationship. For example, it is known that the cyclic shift used for transmitting the uplink SRS in the antenna port 0 is $n_{CS,0}$, then the equation for calculating the cyclic shifts used for transmitting the uplink SRS in other antenna ports is: $n_{CS,i} = (\alpha \cdot n_{CS,0} + \beta_i)$ mod N, wherein $\alpha = \pm 1$, $\beta_i = 0,1,2,...,N\text{-}1$, $i$ is an antenna port index, $i = 0,1,...,N\text{-}1$, and $N$ is the total number of the cyclic shifts. For the LTE-A system, $N = 8$. Said calculation equation is the configured implicit mapping relationship. Preferably, $\alpha = 1$ and $\beta_i = N/Tx \cdot i$, where $Tx$ is the number of transmitting antennae. In practical applications, if there is only one implicit mapping relationship, this implicit mapping relationship can be preconfigured in the UE; and if there is a plurality of implicit mapping relationships, the UE can be notified to use which one of the implicit mapping relationships by the signaling.

FIG. 6 is a schematic diagram of the first embodiment of transmitting a non-precoded uplink SRS under a CDM mode in accordance with the present invention. As shown in FIG. 6, the UE has two transmitting antennae, TX0 and TX1 respectively, and the UE obtains the cyclic shift used for transmitting the uplink SRS in each antenna by the signaling notification. The eNB explicitly notifies to the UE by the signaling that the cyclic shifts used for transmitting the uplink SRSs in the two antennae (TXO, TX1) are $n_{CS,0}$ and $n_{CS,1}$ respectively. After the UE receives the signaling from the eNB, the UE transmits, in the TX0, the SRS0 sequence obtained by cyclically shifting the root sequence by $n_{CS,0}$ and transmits, in the TX1, the SRS1 sequence obtained by cyclically shifting the root sequence by $n_{CS,1}$; and the SRS0 sequence and the SRS 1 sequence are orthogonal with each other in code domain. Therefore, the UE can allocate different cyclic shifts used for transmitting the uplink SRSs in different antennae by the CDM, so as to obtain the orthogonal code domain resources so that the different antennae can transmit the SRS orthogonal in the code domain.

FIG. 7 is a schematic diagram of the second embodiment of transmitting a non-precoded uplink SRS under a CDM mode in accordance with the present invention. As shown in FIG. 7, the UE has two transmitting antennae, TX0 and TX1 respectively, and the UE obtains the cyclic shift used for transmitting the uplink SRS in each antenna by the implicit mapping. The eNB explicitly notifies to the UE by the signaling that the cyclic shift used for transmitting the uplink SRS in the TX0 is $n_{CS,0}$. After the UE receives the signaling from the eNB, the UE obtains the cyclic shift $n_{CS,1}$ used for transmitting the uplink SRS in the TX1 from the $n_{CS,0}$ used for transmitting the uplink SRS in the TX0 according to the configured implicit mapping relationship $n_{CS,1} = (n_{CS,0} + \beta_1)$ mod N , where $\beta_1 = N/2$ and $N = 8$ in the LTE-A system. The UE transmits, in the TX0, the SRS0 sequence obtained by cyclically shifting the root sequence by $n_{CS,0}$ and transmits, in the TX1, the SRS1 sequence obtained by cyclically shifting the root sequence by $n_{CS,1}$, and the SRS0 sequence and the SRS1 sequence are orthogonal with each other in code domain. Therefore, the UE can allocate different cyclic shifts used for transmitting the uplink SRSs in the different antennae by the CDM to obtain the orthogonal code domain resources, so that the different antennae transmit the SRSs orthogonal in the code domain.

Additionally, each root sequence for obtaining the uplink SRS has good orthogonality, therefore in the CDM, each antenna can transmit the uplink SRS in the orthogonal code domain resources by allocating different root sequences to different antennae or by allocating the combination of different root sequences and the cyclic shifts of the root sequence.

Transmitting the uplink SRS without precoding by the TDM

For the TDM, the UE allocates the orthogonal time domain resources for transmitting the uplink SRSs to different antennae, and the different antennae transmit the uplink SRSs in the orthogonal time domain resources. Specifically, in the LTE-A system, the UE allocates different subframe positions for transmitting the uplink SRS to different antennae so that the different antennae transmit the uplink SRSs in the orthogonal time domain resources. The UE can obtain the subframe position of transmitting the uplink SRS in each antenna by the following two ways: one is a way of signaling notification, that is, the eNB notifies to the UE by the signaling the subframe position of transmitting the uplink SRS in each antenna; the other one is a way of implicit mapping, that is, the eNB notifies to the UE by the signaling the subframe position of transmitting the uplink SRS in part of antennae such as one antenna, while the subframe positions of transmitting the uplink SRSs in other antennae are obtained from the known subframe position of transmitting the uplink SRS according to the configured implicit mapping relationship.

Said implicit mapping relationship can be preconfigured in the UE or be notified to the UE by the signaling in advance. There is a plurality of specific implementations for the implicit mapping relationship. For example, it is known that the subframe offset of transmitting the uplink SRS in the antenna port 0 is $T_{offset,0}$, then the subframe position of transmitting the uplink SRS in this antenna port can be uniquely determined by the subframe offset; according to the configured implicit mapping relationship, other antenna ports transmit the uplink SRSs in the subframe position closest to the $T_{offset,0}$ in the subframe offsets that allow to transmit the uplink SRSs. In practical applications, if there is only one implicit mapping relationship, this implicit mapping relationship can be preconfigured in the UE; and if there is a plurality of implicit mapping relationships, the UE can be notified to use which one of the implicit mapping relationships by the signaling.

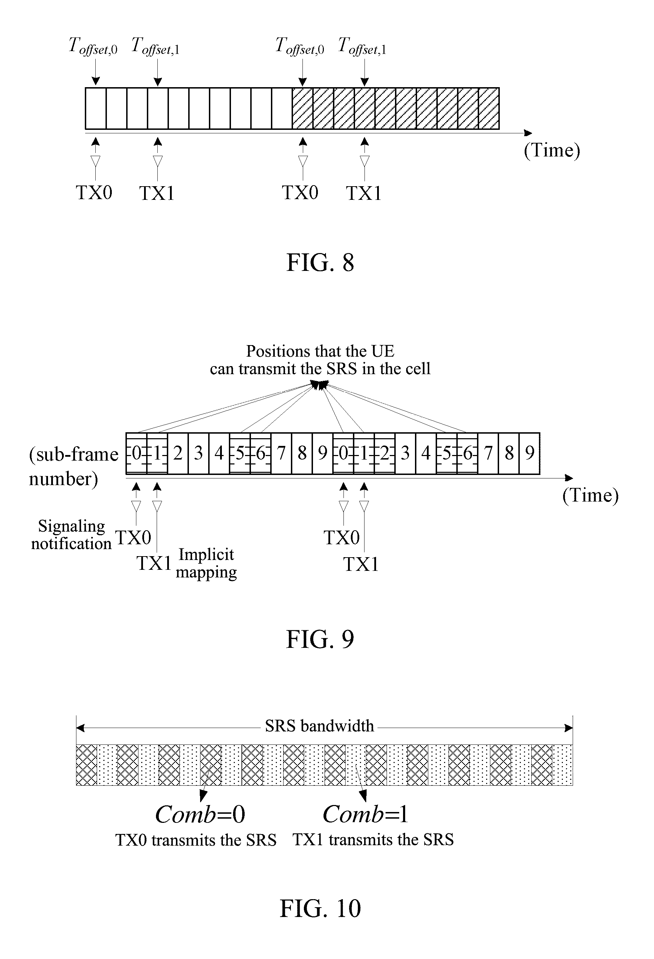

FIG. 8 is a schematic diagram of the first embodiment of transmitting a non-precoded uplink SRS under a TDM mode in accordance with the present invention. As shown in FIG. 8, the UE has two transmitting antennae, TX0 and TX1 respectively, and the UE obtains the subframe position of transmitting the uplink SRS in each antenna by the signaling notification. The eNB explicitly notifies to the UE by the signaling that the subframe positions, that is, the subframe offsets, of transmitting the uplink SRS in the two antennae (TXO, TX1) are $T_{offset,0}$ and $T_{offset,1}$ respectively. After the UE receives the signaling from the eNB, the TX0 transmits the uplink SRS at the subframe position where the subframe offset is $T_{offset,0}$ and the TX1 transmits the uplink SRS at the subframe position where the subframe offset is $T_{offset,0}$, and the SRS transmitted by the two antennae are orthogonal with each other in time domain. Therefore, the UE can let different antenna send the uplink SRSs in different time domain resources by the TDM to obtain the time domain orthogonality, so that different antennae transmit the SRSs orthogonal in the time domain.

FIG. 9 is a schematic diagram of the second embodiment of transmitting a non-precoded uplink SRS under a TDM mode in accordance with the present invention. As shown in FIG. 9, the cell-specific period in the cell is 5ms, the subframe offset is {0, 1}; and one UE in the cell has two transmitting antennae, TX0 and TX1 respectively, and the UE obtains the subframe position of transmitting the uplink SRS in each antenna by the implicit mapping. The eNB explicitly notifies to the UE by the signaling that the subframe position, that is, the subframe offset, of transmitting the uplink SRS in the TX0 is $T_{offset,0} = 0$. After the UE receives the signaling from the eNB, the TX1 transmits the uplink SRS at the subframe position closest to $T_{offset,0}$ according to the configured implicit mapping relationship, and determines $T_{offset,1}=1$ according to $T_{offset,0} = 0$ and the subframe offset being {0,1}. Therefore, the TX0 of the UE transmits the uplink SRS at the subframe position where the subframe offset is $T_{offset,0}$ and the TX1 of the UE transmits the uplink SRS at the subframe position where the subframe offset is $T_{offset,0}$ and the SRS transmitted by the two antennae are orthogonal with each other in time domain. Therefore, the UE can let different antenna send the uplink SRSs in different time domain resources by the TDM to obtain the time domain orthogonality, so that different antennae transmit the SRSs orthogonal in the time domain.

Transmitting the uplink SRS without precoding by the FDM

For the FDM, the UE allocates the orthogonal frequency domain resources for transmitting the uplink SRSs to different antennae, and the different antennae transmit the uplink SRSs in the orthogonal frequency domain resources. Specifically, in the LTE-A system, the UE can allocate different frequency combs of transmitting the uplink SRSs to different antennae so that the different antennae transmit the uplink SRSs in the orthogonal frequency domain resources. The UE can obtain the frequency combs used for transmitting the uplink SRS in each antenna by the following two ways: one is a way of signaling notification, that is, the eNB notifies to the UE by the signaling the frequency comb used for transmitting the uplink SRS in each antenna; the other one is a way of implicit mapping, that is, the eNB notifies to the UE by the signaling the frequency comb used for transmitting the uplink SRS in part of antennae such as one antenna, while the frequency combs used for transmitting the uplink SRSs in other antennae are obtained from the known frequency comb used for transmitting the uplink SRS according to the configured implicit mapping relationship. Said implicit mapping relationship can be preconfigured in the UE or be notified to the UE by the signaling in advance. There is a plurality of specific implementation for the implicit mapping relationship. For example, the uplink SRS is transmitted in the frequency comb different from $Comb_j$ which is the frequency comb used by the antenna $j$. In practical applications, if there is only one implicit mapping relationship, this implicit mapping relationship can be preconfigured in the UE; and if there is a plurality of implicit mapping relationships, the UE can be notified to use which one of the implicit mapping relationships by the signaling.

As shown in FIG. 10, the UE has two transmitting antennae, TX0 and TX1 respectively, and the UE obtains the frequency comb used for transmitting the uplink SRS in each antenna by the signaling. The eNB explicitly notifies to the UE by the signaling that the frequency domain positions, that is, the frequency combs, used for transmitting the uplink SRSs in the two antennae (TXO, TX1) are Comb0 and Comb1. After the UE receives the signaling from the eNB, the TX0 transmits the uplink SRS in the carrier of which frequency domain position is Comb0 and the TX1 transmits the uplink SRS in the carrier of which frequency domain position is Comb1, and the SRS transmitted by the two antennae are orthogonal with each other in frequency domain. Therefore, the UE can let different antenna send the uplink SRSs in different frequency domain resources by the FDM to obtain the frequency domain orthogonality, so that different antennae transmit the orthogonal SRSs.

Refer to FIG. 10 again, the number of frequency combs in the LTE-A system is 2, that is, Comb={0,1}. The UE has two transmitting antennae, TX0 and TX1 respectively, and the UE obtains the frequency comb used for transmitting the uplink SRS in each antenna by the implicit mapping. The eNB explicitly notifies to the UE by the signaling that the frequency domain position, that is, the frequency comb, used for transmitting the uplink SRS in the TX0 is Comb=0. After the UE receives the signaling from the eNB, the UE determines that the frequency comb used for transmitting the uplink SRS in the TX1 is Comb=1 according to the configured implicit mapping relationship. Therefore, the TX1 of the UE transmits the uplink SRS in the carrier of which frequency domain position is Comb1, and the SRS transmitted by the two antennae are orthogonal with each other in frequency domain. Therefore, the UE can let different antennae send the uplink SRSs in different frequency domain resources by the FDM to obtain the frequency domain orthogonality, so that the different antennae transmit the orthogonal SRSs.

In addition, in the FDM, besides of the method for implementing the frequency combs, each antenna can transmit the uplink SRS in the orthogonal frequency domain resources by using a method of allocating orthogonal frequency bands to different antennae.

When transmitting non-precoded uplink SRS, a method based on the CDM&TDM, the CDM&FDM, the TDM&FDM, or the CDM&TDM&FDM can be used.

When transmitting non-precoded uplink SRS by the CDM&TDM, the antennae are grouped, and the CDM and/or TDM is used between the groups, and the TDM and/or the CDM is used within one group. Each antenna transmits the uplink SRS in the orthogonal code domain resources and/or time domain resources. The UE can obtain the code domain resources of transmitting the uplink SRS in each antenna by the signaling notification or implicit mapping, and obtain the time domain resources of transmitting the uplink SRS in each antenna by the signaling notification or implicit mapping.

When transmitting non-precoded uplink SRS by the CDM&FDM, the antennae are group, and the CDM and/or FDM is used between the groups, and the FDM and/or the CDM is used within one group. Each antenna transmits the uplink SRS in the orthogonal code domain resources and/or frequency domain resources. The UE can obtain the code domain resources of transmitting the uplink SRS in each antenna by the signaling notification or implicit mapping, and obtain the frequency domain resources of transmitting the uplink SRS in each antenna by the signaling notification or implicit mapping.

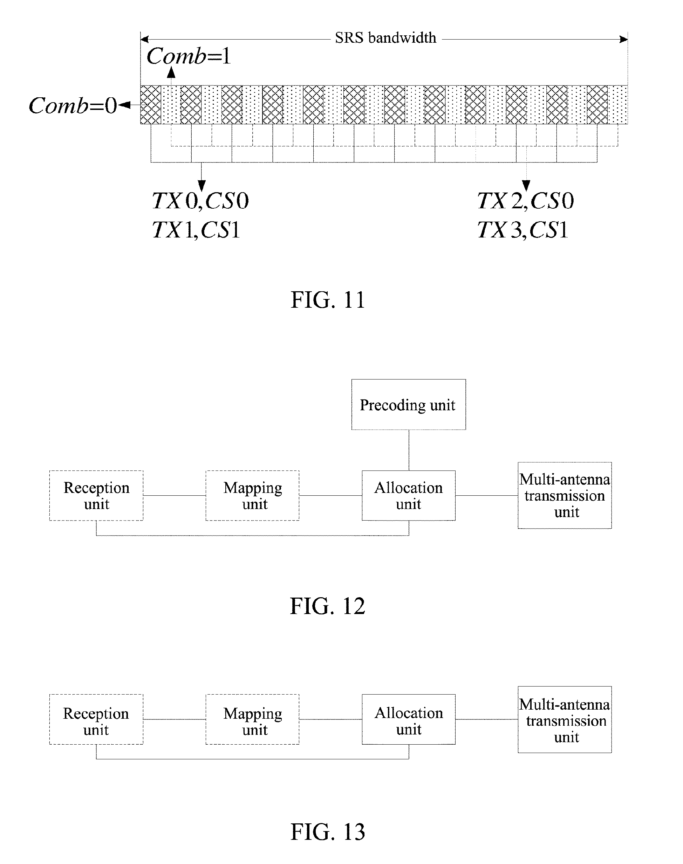

FIG. 11 is a schematic diagram of an embodiment of transmitting a non-precoded uplink SRS under a CDM&FDM mode in accordance with the present invention. As shown in FIG. 11, when there are four antennae, the antennae is divided into two groups, wherein, TX0 and TX1 are in one group, and TX2 and TX3 are in the other group. The UE allocates code resources for transmitting the uplink SRSs to different antennae by the CDM and allocates orthogonal frequency resources for transmitting the uplink SRSs to different antennae by the FDM. The UE obtains the two cyclically shifted code resources, CS0 and CS1, as well as two orthogonal frequency resources, Comb0 and Comb1, by the signaling notification or implicit mapping. And then the UE allocates TX0 and TX1 to transmit the uplink SRSs in the frequency resource of Comb=0, where, the uplink SRS transmitted in the TX0 uses the cyclic shift CS0 and the uplink SRS transmitted in the TX0 uses the cyclic shift CS1; and allocates TX2 and TX3 to transmit the uplink SRSs in the frequency resource of Comb=1, where, the uplink SRS transmitted in the TX2 uses the cyclic shift CS0 and the uplink SRS transmitted in the TX3 uses the cyclic shift CS 1. Each antenna transmits the uplink SRS in the orthogonal code resources and/or frequency resources.

When transmitting non-precoded uplink SRS by the TDM&FDM, the antennae is grouped, and the FDM and/or TDM is used between the groups, and the TDM and/or the FDM is used within one group. Each antenna transmits the uplink SRS in the orthogonal time domain resources and/or frequency domain resources. The UE can obtain the time domain resources of transmitting the uplink SRS in each antenna by the signaling notification or implicit mapping and obtain the frequency domain resources of transmitting the uplink SRS in each antenna by the signaling notification or implicit mapping.

When transmitting non-precoded uplink SRS by the CDM&TDM&FDM, different antenna uses different code domain resources and/or time domain resources and/or frequency domain resources. The meaning of "by the CDM" is allocating the orthogonal code domain resources for transmitting the uplink SRSs to different antennae, the meaning of "by the TDM" is allocating the orthogonal time domain resources for transmitting the uplink SRSs to different antennae, and the meaning of "by the FDM" is allocating the orthogonal frequency domain resources for transmitting the uplink SRSs to different antennae. The code domain resources and/or time domain resources and/or frequency domain resources of transmitting the uplink SRS in each antenna can be obtained either by the signaling notification or by the implicit mapping.

When transmitting the precoded uplink SRS, the specific implementation is basically the same as the above description, and the difference is only that the resource allocation object is precoding matrix rather than antenna. Thus the process is not repeated here.

FIG. 12 is a structural diagram of an apparatus for transmitting precoded uplink SRS in multiple antennae in accordance with the present invention. As shown in FIG. 12, the apparatus comprises a precoding unit, an allocating unit and a multi-antenna transmission unit. Wherein, the precoding unit is used to encode the transmitted uplink SRSs with different precoding matrixes; the allocation unit is used to allocate orthogonal resources to the uplink SRSs with different precoding matrixes; and the multi-antenna transmission unit comprises a plurality of antennae, and each antenna is used to transmit, in the orthogonal resources, the uplink SRSs encoded with the different precoding matrixes. The apparatus further comprises: a reception unit, used to receive the resource corresponding to each precoding matrix sent by the eNB by the signaling, and provide the resources to the allocation unit; or, the apparatus further comprises a reception unit and a mapping unit, wherein: the reception unit is used to receive the resources corresponding to part of the precoding matrixes sent by the eNB by the signaling, and provide the resources to the mapping unit; and the mapping unit is used to determine the resources for transmitting uplink SRSs with the different precoding matrixes according to the configured implicit mapping relationship and the resources corresponding to the precoding matrixes, and provide the resources to the allocation unit.

FIG. 13 is a structural diagram of an apparatus structure for transmitting non-precoded uplink SRS in multiple antennae in accordance with the present invention. As shown in FIG. 13, the apparatus comprises an allocation unit and a multi-antenna transmission unit, wherein, the allocation unit is used to allocate orthogonal resources for transmitting uplink SRSs to different antennae; and the multi-antenna transmission unit comprises a plurality of antennae, and each antenna is used to send the uplink SRS in the orthogonal resources. The apparatus further comprises a reception unit used to receive the resources of transmitting the uplink SRS in each antenna sent by the eNB via the signaling and provide the resources to the allocation unit; or, the apparatus further comprises a reception unit and a mapping unit, wherein: the reception unit is used to receive the resources of transmitting the uplink SRS in part of the antennae sent by the eNB via the signaling and provide the resources to the mapping unit; and the mapping unit is used to determine the resources of transmitting the uplink SRS in each antenna according to the configured implicit mapping relationship and the resources of transmitting the uplink SRS in part of the antennae and provide the resources to the allocation unit. Please refer to the above description for the specific processing of the allocation unit in different cases, and the processing is not repeated here.

The above description is only preferred embodiments of the present invention rather than the restriction of the scope of the present invention.

## Claims

**1.** A multi-antenna transmitting method for a sounding reference signal, wherein, an uplink sounding reference signal is transmitted without using precoding and the method comprises: allocating orthogonal resources to different antennae by a code division multiplexing, a time division multiplexing, a frequency division multiplexing, or any combination thereof, and each antenna transmitting the uplink sounding reference signal in the orthogonal resource.

**2.** The method of claim 1, wherein,
allocating orthogonal resources to different antennae by the code division multiplexing comprises: allocating orthogonal code domain resources for transmitting the uplink sounding reference signal to the different antennae by the code division multiplexing;
allocating orthogonal resources to different antennae by the time division multiplexing comprises: allocating orthogonal time domain resources for transmitting the uplink sounding reference signal to the different antennae by the time division multiplexing;

allocating orthogonal resources to different antennae by the frequency division multiplexing comprises: allocating orthogonal frequency domain resources for transmitting the uplink sounding reference signal to the different antennae by the frequency division multiplexing;

allocating orthogonal resources to different antennae by the combination of the code division multiplexing and the time division multiplexing comprises: allocating orthogonal code domain resources for transmitting the uplink sounding reference signal to the different antennae by the code division multiplexing, and/or allocating orthogonal time domain resources for transmitting the uplink sounding reference signal to the different antennae by the time division multiplexing;

allocating orthogonal resources to different antennae by the combination of the code division multiplexing and the frequency division multiplexing comprises: allocating orthogonal code domain resources for transmitting the uplink sounding reference signal to the different antennae by the code division multiplexing, and/or allocating orthogonal frequency domain resources for transmitting the uplink sounding reference signal to the different antennae by the frequency division multiplexing;

allocating orthogonal resources to different antennae by the combination of the time division multiplexing and the frequency division multiplexing comprises: allocating orthogonal time domain resources for transmitting the uplink sounding reference signal to the different antennae by the time division multiplexing, and/or allocating orthogonal frequency domain resources for transmitting the uplink sounding reference signal to the different antennae by the frequency division multiplexing;

allocating orthogonal resources to different antennae by the combination of the code division multiplexing, the time division multiplexing and the frequency division multiplexing comprises: allocating orthogonal code domain resources for transmitting the uplink sounding reference signal to the different antennae by the code division multiplexing, and/or allocating orthogonal time domain resources for transmitting the uplink sounding reference signal to the different antennae by the time division multiplexing, and/or allocating orthogonal frequency domain resources for transmitting the uplink sounding reference signal to the different antennae by the frequency division multiplexing.

3. The method of claim 2, wherein, in a long term evolution - advanced system,
said code domain resource is: a root sequence and/or a cyclic shift of the root sequence;
said time domain resource is: a subframe position or a subframe offset;
said frequency domain resource is: a frequency band and/or a frequency comb.

4. The method of any of claims 1 to 3, wherein, before allocating orthogonal resources to different antennae, the method further comprises:

a base station, e-Node-B, notifying to a user equipment by a signaling the resource of transmitting the uplink sounding reference signal in each antenna; or,
an e-Node-B notifying to a user equipment by a signaling the resources of transmitting the uplink sounding reference signals in part of antennae, and the user equipment determining the resource of transmitting the sounding reference signal in each antenna according to a configured implicit mapping relationship.

5. The method of claim 4, wherein,
if the way for allocating orthogonal resources to different antennae comprises at least the code division multiplexing, said resource is the cyclic shift of the root sequence, and said implicit mapping relationship is: $n_{CS,i} = (\alpha \cdot n_{CS,j} + \beta_i)$ mod $N$, wherein, i is an antenna port index, $\alpha = \pm 1$, $n_{CS,j}$ is the cyclic shift used by the known antenna port $j$ to send the uplink sounding reference signal, $\beta_i = 0,1,2,...,N\text{-}1$, N is the total number of the cyclic shifts, $i = 0,1,...,N\text{-}1$, and $j = 0,1,...,N\text{-}1$;
if the way for allocating orthogonal resources to different antennae comprises at least the time division multiplexing, said resource is the subframe offset or the subframe position, and said implicit mapping relationship is: transmitting the uplink sounding reference signal in the subframe position closest to $T_{offset,j}$ in the subframe offset that allows to send the uplink sounding reference signal, wherein $T_{offset,j}$ is the subframe offset of the known antenna port $j$ transmitting the uplink sounding reference signal;
if the way for allocating orthogonal resources to different antennae comprises at least the frequency division multiplexing, said resource is the frequency comb, and said implicit mapping relationship is: transmitting the uplink sounding reference signal in the frequency comb different from $Comb_j$, wherein $Comb_j$ is the freqeucny comb used by the antenna $j$.

6. The method of claim 5, wherein, said $\alpha=1$; said $\beta_i=N/Tx \cdot i$, where $Tx$ is the number of transmitting antennae.

**7.** A multi-antenna transmitting method for a sounding reference signal, wherein, an uplink sounding reference signal is transmitted with using precoding and the method comprises:

allocating orthogonal resources to uplink sounding reference signals using different precoding matrixes by a code division multiplexing, a time division multiplexing, a frequency division multiplexing, or any combination thereof, and each antenna transmitting the uplink sounding reference signal encoded by the different precoding matrix in the orthogonal resource.

**8.** The method of claim 7, wherein,

allocating orthogonal resources to the uplink sounding reference signals applying the different precoding matrixes by the code division multiplexing comprises: allocating orthogonal code domain resources to the different precoding matrixes by the code division multiplexing;

allocating orthogonal resources to the uplink sounding reference signals applying the different precoding matrixes by the time division multiplexing comprises: allocating orthogonal time domain resources to the different precoding matrixes by the time division multiplexing;

allocating orthogonal resources to the uplink sounding reference signals applying the different precoding matrixes by the frequency division multiplexing comprises: allocating orthogonal frequency domain resources to the different precoding matrixes by the frequency division multiplexing;

allocating orthogonal resources to the uplink sounding reference signals applying the different precoding matrixes by the combination of the code division multiplexing and the time division multiplexing comprises: allocating orthogonal code domain resources to the different precoding matrixes by the code division multiplexing, and/or allocating orthogonal time domain resources to the different precoding matrixes by the time division multiplexing;

allocating orthogonal resources to the uplink sounding reference signals applying the different precoding matrixes by the combination of the code division multiplexing and the frequency division multiplexing comprises: allocating orthogonal code domain resources to the different precoding matrixes by the code division multiplexing, and/or allocating orthogonal frequency domain resources to the different precoding matrixes by the frequency division multiplexing;

allocating orthogonal resources to the uplink sounding reference signals applying the different precoding matrixes by the combination of the time division multiplexing and the frequency division multiplexing comprises: allocating orthogonal time domain resources to the different precoding matrixes by the time division multiplexing, and/or allocating orthogonal frequency domain resources to the different precoding matrixes by the frequency division multiplexing;

allocating orthogonal resources to the uplink sounding reference signals applying the different precoding matrixes through the combination of the code division multiplexing, the time division multiplexing and the frequency division multiplexing comprises: allocating orthogonal code domain resources to the different precoding matrixes by the code division multiplexing, and/or allocating orthogonal time domain resources to the different precoding matrixes by the time division multiplexing, and/or allocating orthogonal frequency domain resources to the different precoding matrixes by the frequency division multiplexing.

**9.** The method of claim 8, wherein, in a long term evolution - advanced system,

said frequency domain resource is: a frequency band and/or a frequency comb;

said code domain resource is: a root sequence and/or a cyclic shift of the root sequence; said time domain resource is: a subframe position or a subframe offset.

**10.** The method of any of claims 7 to 9, wherein, before allocating orthogonal resources to different antennae, the method further comprises:

a base station, e-Node-B, notifying to a user equipment by a signaling the resource corresponding to each precoding matrix; or,

an e-Node-B notifying to a user equipment by a signaling the resources corresponding to part of the precoding matrixes, and the user equipment determining the resource corresponding to each precoding matrix according to a configured implicit mapping relationship.

**11.** The method of claim 10, wherein,

if the way for allocating orthogonal resources to different precoding matrixes comprises at least the code division multiplexing, said resource is the cyclic shift of the root sequence, and said implicit mapping relationship is: $n_{CS,i} = (\alpha \cdot n_{CS,j} + \beta_i) \bmod N$, wherein, i is a precoding matrix index, $\alpha = \pm 1$, $n_{CS,j}$ is the cyclic shift used for transmitting the uplink sounding reference signal encoded with the known precoding matrix $j$, $\beta_i = 0,1,2,...,N\text{-}1$, N is the total number of the cyclic shifts, $i = 0,1,...,N$-1, and $j = 0,1,...,N$-1;

if the way for allocating orthogonal resources to different precoding matrixes comprises at least the time division multiplexing, said resource is the subframe offset or the subframe position, and said implicit mapping relationship is: transmitting the uplink sounding reference signal in the subframe position closest to $T_{offset,j}$ in the subframe offset that allows to send the uplink sounding reference signal, wherein $T_{offset,j}$ is the subframe offset of transmitting the uplink sounding reference signal encoding with the known precoding matrix $j$;

if the way for allocating orthogonal resources to different precoding matrixes comprises at least the frequency division multiplexing, said resource is the frequency comb, and said implicit mapping relationship is: transmitting the uplink sounding reference signal in the frequency combs different from $Comb_j$, wherein $Comb_j$ is the freqeucny comb of transmitting the uplink sounding reference signal encoded with the precoding matrix $j$.

12. The method of claim 11, wherein, said $\alpha=1$; said $\beta_i = N/Tx\cdot i$, where $Tx$ is the number of transmitting antennae.

13. A multi-antenna transmitting apparatus for a sounding reference signal, wherein, an uplink sounding reference signal is transmitted without using precoding and the apparatus comprises: an allocation unit and a multi-antenna transmission unit, wherein,

said allocation unit is used to allocate orthogonal resources for transmitting the uplink sounding reference signals to different antennae; and

said multi-antenna transmission unit comprises multi-antenna, and each antenna is used to transmit the uplink sounding reference signal in the orthogonal resource.

14. The apparatus of claim 13, further comprising:

a reception unit, used to receive the resource of transmitting the uplink sounding reference signal in each antenna sent by a base station, e-Node-B, via a signaling; or,

a reception unit and a mapping unit, wherein: the reception unit is used to receive the resources of transmitting the uplink sounding reference signals in part of antennae sent by an e-Node-B via a signaling; and the mapping unit is used to determine the resource of transmitting the uplink sounding reference signal in each antenna according to a configured implicit mapping relationship and the resources of transmitting the uplink sounding reference signals in part of antennae.

15. A multi-antenna transmitting apparatus for a sounding reference signal, wherein, an uplink sounding reference signal is transmitted with using precoding and the apparatus comprises: a precoding unit, an allocation unit and a multi-antenna transmission unit, wherein,

said precoding unit is used to encode transmitted uplink sounding reference signals with different precoding matrixes; said allocation unit is used to allocate orthogonal resources to the uplink sounding reference signals encoded with the different precoding matrixes; and

said multi-antenna transmission unit comprises multi-antenna, and is used to transmit the uplink sounding reference signals encoded with the different precoding matrixes in the orthogonal resources.

16. The apparatus of claim 15, further comprising:

a reception unit, used to receive the resource corresponding to each precoding matrix sent by a base station, e-Node-B, via a signaling; or,

a reception unit and a mapping unit, wherein: the reception unit is used to receive the resources corresponding to part of the precoding matrixes sent by an e-Node-B via a signaling; and the mapping unit is used to determine the resources of transmitting the uplink sounding reference signals encoded with the different precoding matrixes according to a configured implicit mapping relationship and the resources corresponding to part of the precoding matrixes.

Uplink system bandwidth

SRS bandwidth of the first level
(the maximum SRS bandwidth)

0 level (the first level)

1 level (the second level)

2 level (the third level)

3 level (the fourth level)

FIG. 1

SRS bandwidth

$Comb=0$      $Comb=1$

FIG. 2

Uplink system bandwidth

SRS bandwidth of the first level
(the maximum SRS bandwidth)

UE1, $n_{RRC}=0$     UE3, $n_{RRC}=4$

UE2, $n_{RRC}=3$     UE4, $n_{RRC}=6$

FIG. 3

| S | | | | | | | | | | | | | | | | | | | | | S | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 |

FIG. 4

SRS bandwidth

*Comb*=0

SRS encoded
by PM0

*Comb*=1

SRS encoded
by PM1

FIG. 5

Obtain a SRS0
sequenceby using $n_{CS,0}$
(signaling notification)

Obtain a SRS1
sequence by using $n_{CS,1}$
(signaling notification)

SRS0

SRS1

TX0

TX1

UE

FIG. 6

Obtain a SRS0
sequence by using $n_{CS,0}$
(signaling notification)

Obtain a SRS1
sequence by using $n_{CS,1}$
(implicit mapping)

SRS0

SRS1

TX0

TX1

UE

FIG. 7

$T_{offset,0}$   $T_{offset,1}$         $T_{offset,0}$   $T_{offset,1}$

(Time)

TX0    TX1              TX0    TX1

FIG. 8

Positions that the UE
can transmit the SRS in the cell

(sub-frame number) | 0 | 1 | 2 | 3 | 4 | 5 | 6 | 7 | 8 | 9 | 0 | 1 | 2 | 3 | 4 | 5 | 6 | 7 | 8 | 9 |

(Time)

Signaling
notification TX0                    TX0

TX1  Implicit
      mapping                        TX1

FIG. 9

SRS bandwidth

*Comb*=0              *Comb*=1
TX0 transmits the SRS   TX1 transmits the SRS

FIG. 10

SRS bandwidth

*Comb=1*

*Comb=0*

*TX* 0,*CS*0
*TX* 1,*CS*1

*TX* 2,*CS*0
*TX* 3,*CS*1

FIG. 11

Precoding unit

Reception unit —— Mapping unit —— Allocation unit —— Multi-antenna transmission unit

FIG. 12

Reception unit —— Mapping unit —— Allocation unit —— Multi-antenna transmission unit

FIG. 13

# INTERNATIONAL SEARCH REPORT

| International application No. |
| --- |
| PCT/CN2010/072084 |

**A. CLASSIFICATION OF SUBJECT MATTER**

H04B7/06(2006.01)i

According to International Patent Classification (IPC) or to both national classification and IPC

**B. FIELDS SEARCHED**

Minimum documentation searched (classification system followed by classification symbols)

IPC: H04B, H04W, H04Q, H04L

Documentation searched other than minimum documentation to the extent that such documents are included in the fields searched

Electronic data base consulted during the international search (name of data base and, where practicable, search terms used)

CPPABS, CNTXT, CNKI, WPI, EPODOC: multi-antenna, SRS, CSI, reference w signal, uplink, TDM, CDM, FDM, sequence, cycle, shift, multipl+

**C. DOCUMENTS CONSIDERED TO BE RELEVANT**

| Category* | Citation of document, with indication, where appropriate, of the relevant passages | Relevant to claim No. |
| --- | --- | --- |
| PX | CN101540631A (ZTE COMMUNICATION CO LTD) 23 Sep. 2009 (23.09.2009) claims 1-14 | 1-5, 7-11, 13-16 |
| X | CN101325739A (BEIJING SAMSUNG COMMUNICATION TECHNOLOG et al) 17 Dec. 2008 (17.12.2008)）description page 3 line 23-page 4 line 2, pages 20-21 "embodiment seven" | 1-2, 4, 7-8, 10, 13-16 |
| Y | | 3, 9 |
| Y | CN101227703A (BEIJING SAMSUNG COMMUNICATION TECHNOLOG et al) 23 Jul. 2008 (23.07.2008) description page 3 paragraphs 2-3 | 3, 9 |
| A | CN101346923A (QUALCOMM INC) 14 Jan. 2009 (14.01.2009) the whole document | 1-16 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| **18 Jun. 2010(18.06.2010)** | **08 Jul. 2010 (08.07.2010)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>MENG Wenting<br>Telephone No. (86-10)62411434 |
| --- | --- |

Form PCT/ISA /210 (second sheet) (July 2009)

## INTERNATIONAL SEARCH REPORT

| | International application No. |
|---|---|
| | PCT/CN2010/072084 |

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
      because they relate to subject matter not required to be searched by this Authority, namely:

2. ☐  Claims Nos.:
      because they relate to parts of the international application that do not comply with the prescribed requirements to such an extent that no meaningful international search can be carried out, specifically:

3. ☐  Claims Nos.:
      because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

Group I : claims 1, 7;   Group II : claim 13; Group III: claim 15

The same or corresponding technical features 'allocating orthogonal resources, and each antenna transmits uplink SRS in the orthogonal resources' are common knowledge in the art, therefore, the three groups of inventions do not have the same or corresponding specific technical features, and do not belong to one concept, so they do not meet the requirement of unity of invention in accordance with the PCT Rule 13.1, 13.2 and 13.3.

1. ☐  As all required additional search fees were timely paid by the applicant, this international search report covers all searchable claims.

2. ☒  As all searchable claims could be searched without effort justifying an additional fees, this Authority did not invite payment of additional fee.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on protest**          ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA /210 (continuation of first sheet (2)) (July 2009)

## INTERNATIONAL SEARCH REPORT
### Information on patent family members

| | International application No. |
| --- | --- |
| | PCT/CN2010/072084 |

| Patent Documents referred in the Report | Publication Date | Patent Family | Publication Date |
| --- | --- | --- | --- |
| CN101540631A | 23.09.2009 | NONE | |
| CN101325739A | 17.12.2008 | NONE | |
| CN101227703A | 23.07.2008 | NONE | |
| CN101346923A | 14.01.2009 | WO2007051192A2 | 03.05.2007 |
| | | US2007165738A1 | 19.07.2007 |
| | | INDELNP200803516E | 08.08.2008 |
| | | KR20080059672A | 30.06.2008 |
| | | EP2039046A2 | 25.03.2009 |
| | | JP2009514460T | 02.04.2009 |
| | | CA2627388A1 | 03.05.2007 |
| | | TW200733662A | 01.09.2007 |
| | | WO2007051192A8 | 13.08.2009 |
| | | RU2008121171A | 10.12.2009 |

Form PCT/ISA /210 (patent family annex) (July 2009)